# EUROPEAN PATENT APPLICATION

(11) **EP 1 981 187 A1**
(43) Date of publication of application: **15.10.2008**
(21) Application number: 07290449.3
(22) Date of filing: 11.04.2007
(51) Int. Cl.: H04H 1/00

(54) **A content storing method in a mobile TV terminal for allowing more appearing channels to be available**

(71) Applicant: Axalto S.A., 92190 Meudon (FR)
(72) Inventor: Rangoni, Gabriel, 92190 Meudon (FR)
(74) Representative: Jacquot, Ludovic R. G.

(57) **Abstract**

The invention relates to a method for rendering content on a mobile equipment, comprising rendering a content from a broadcasted stream (10), the method further comprising the step which consists in providing a mass memory in the mobile equipment and storing content from the broadcasted stream into the mass memory characterized in that it comprises the step which consists in a remote broadcaster entity commanding (11, 12, 13, 15) the mobile equipment into storing the content from the broadcasted stream into the mass memory.

## Description

The invention relates to mobile TV, i.e. broadcasting of TV programs onto mobile equipment.

Mobile TV has had a rapid deployment in recent times, which consists in proposing to users of third generation mobile phones to receive TV programs onto their mobile phones. Mobile TV is not limited to broadcasting of TV programs onto mobile phones. A scheme exists which consists in rendering such broadcasted programs onto radiowave equipments of the size of a phone handset, but which does not have the ability to perform full duplex voice service, i.e. not enabled for mobile telephony.

Mobile TV, when compared to cable TV or TV on the wired internet, suffers from a limited width of passing band, which practically means that a limited number of concurrently broadcasted programs are available, i.e. the user has a limited choice of programs at a given time, typically ten programs on ten respective channels.

The operators, which become broadcasters by proposing mobile TV to their usual telephony end-users, and more generally any mobile TV broadcaster, would like to offer more choice of available channels to their mobile end-users at any given time.

The invention aims at allowing the broadcasters to propose a higher number of available broadcasted programs at any given time to an end-user.

This purpose is achieved by means of the present invention as recited in the appended claims.

Other purposes, aspects and advantages of the invention will appear through the following description, which is made in reference to the figures, among which:
- figure 1 is a datagram illustrating a broadcasted stream and associated tasks in a first exemplary embodiment of the invention,
- figure 2 is a datagram illustrating a broadcasted stream and associated tasks in a second exemplary embodiment of the invention,
- figure 3 is a datagram illustrating a broadcasted stream and associated tasks in a third exemplary embodiment of the invention,

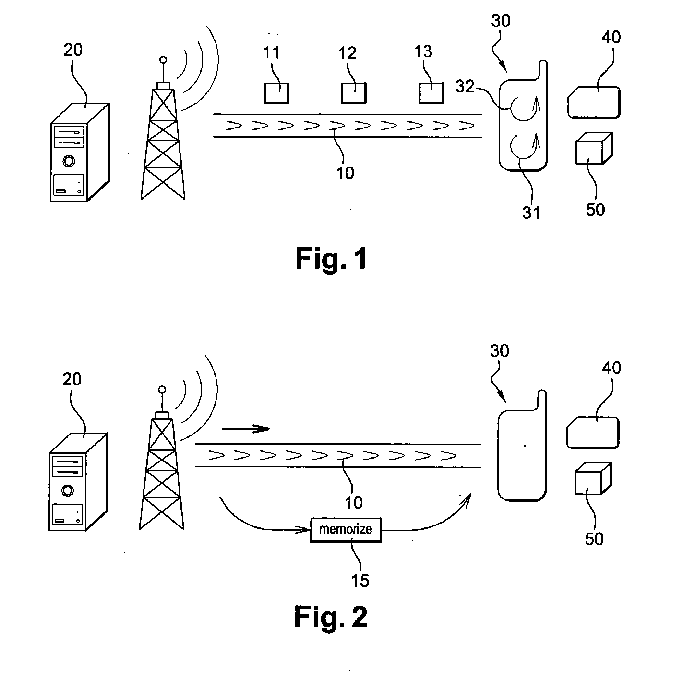

A broadcasted stream is represented on figure 1 under reference 10, which comprises 5 channels. Stream 10 is broadcasted by a broadcast server 20 onto a set of mobile equipments 30.

In the present embodiment, each mobile equipment 30 comprises a mobile handset, a subscriber identity module (SIM) 35 removably inserted in the mobile handset and which carries secret credentials for accessing to a non-represented mobile telephony network, and a mass memory card 36 of the flash memory type, also inserted into the mobile handset. Mass memory card 36 is preferably a secure card, for example a SD card - secure digital - card.

The mobile equipment 30 has the ability to render anyone of the five channels as carried in the stream 10.

Each one of the five channels carries a digital signal which is decoded by the mobile equipment 30. For that purpose, the mobile equipment comprises a memory location which stores a secret key and implements a piece of software which uses this secret key for deciphering the received stream 10. More precisely, this piece of software derives successive keys based on the secret key and based on additional informations that the mobile equipment retrieves from the broadcasted stream. Such additional informations are, in the present embodiment, some successive session keys which are encrypted by means of the same secret key and transmitted onto the stream.

Each successive session key is decrypted by the dedicated piece of software of the mobile equipment 30 and thereafter applied onto the remaining part of the broadcasted stream 10 for decrypting a part of the broadcasted content which is momentarily encrypted with the considered session key.

A set of successive instructions 11, 12, 13... are inserted inside the broadcasted stream 10 and a reading application 31 is hosted in the mobile equipment 30 which application monitors the stream and recognizes the such instructions 11, 12, 13.... Once recognized, instructions 11, 12, 13... are executed by another application 32 which will be described hereafter,

Application 32 in controlled by instructions 11, 12, 13... into memorizing a channel of the received stream into the mass memory card 36. A first instruction 11 has an operand which is the channel which is to be memorized. This first command is MEMORIZE (#), where # is a number identifying the channel the broadcasted content of which is to be memorized.

The received and recognized instructions 11, 12, 13... also comprise an instruction 12 for stopping the currently performing memorizing of content from the stream 10.

Another type of command 13 is a command for switching channel, i.e. memorizing a channel which is different from the channel which was being memorized until receipt of this switching command 13.

The fact that the broadcast server 20 commands the memorizing allows the broadcaster to memorize contents into the mobile equipment 30 which may be watched by the end-user at a time when the end-user is typically watching mobile TV although the such previously memorized content can not be broadcasted in the stream because the stream is already occupied by the five programs being currently on the limited five channels.

The end-user can therefore choose at this precise time to envision or play the previously stored program rather the currently broadcasted ones.

Thanks to this previous storing of programs, the end-user had a choice among an extended amount of programs which all result from choices of the broadcaster and which therefore appear to the end-user as though they were currently broadcasted programs.

By previously storing a set of five previously broadcasted contents, each being around two hours length, the end-user is proposed a total amount of 10 programs, appearing to him as though they were 10 currently broadcasted channels.

By commanding himself the storing of programs from remote, the broadcaster is rendered able to choose the programs which are going to be available to the end-user at a particular time, as though these programs were indeed broadcasted at that particular time. The broadcaster here organizes previous broadcasting and memorizing sessions so as to fill the mass memory with the proper programs that he wants to propose to the end-user at the next particular time, for example next "prime time" time slot.

Once such next particular time is elapsed, the broadcaster resumes a set of broadcastings and associated storings so that the mass memory is replaced by a next set of different programs, which will be available to the end-user concurrently to the broadcasted streams at the next particular time,

The live broadcasted channels and the previously stored programs are proposed to the end-user with a same man-machine interface, i.e. are identified on the screen of the mobile equipment 30 with the same level of availability. For example, if the available live broadcasted channels are identified by icons of a given size on the screen of the end-user, the previously stored programs are identified with icons having the same size inside the same screen as the live broadcasted programs.

If the live broadcasted programs are proposed to the end-user as a mosaic of miniaturized windows each being animated with the current images of the considered program, the end-user being able to displace a cursor onto each one of these windows, thereby also selecting the soundtrack to be played live, i.e, the soundtrack of the channel with the cursor thereon, then the previously stored programs are also proposed to the end-user in this same manner. For that purpose, an application in the mobile equipment reads each previously stored program and builds a corresponding animated window with corresponding soundtrack for simulating a same window as though the stored program was a live broadcasted one.

With this broadcaster-triggered storing prior to watching, for example documentaries may be stored during the morning so as to be available in memory when the end-user typically watches mobile TV, i.e. typically in the evening. An end-user who is disappointed with the contents currently broadcasted during the evening, i.e. typically news programs and fiction films, may then watch a documentary as though the documentary was broadcasted live.

This embodiment also allows the broadcaster to let the prestored contents be available during a predetermined amount of time which he decides upon. The amount of time may be fixed selectively according to different natures of contents.

Fro example, the amount of time a content is made available in memory may differ according to the success a content is expected to have. A famous film may be memorized and leaved available in the memory for twelve hours whereas a cooking recipe may be leaved available for five hours.

In another embodiment, the content of the mass memory of the mobile equipment 30, here of the mass memory card 36, is updated on a regular time basis.

For example, the broadcaster sends a memorizing command every two hours, which stores a new currently broadcasted program into the memory and thereby erases the previously stored program. This way, an end-user trying to watch mobile TV at any time in the day will obtain not only the currently broadcasted programs, but also a freshly stored program from two hours ago because such program has been refreshed on a regular basis.

This way, the broadcaster provides a set of time-displaced programs which are proposed together with the live broadcasted programs as though they were on additional available channels.

The content of the mass memory card 36 may be either totally erased under command of the remote broadcaster 20, or, as another example, updated on the basis of a First In - First Out principle.

In such embodiment, the mass memory card 36 is used as a buffer for a differed rendering of a TV program, the buffer being at the level of the mobile end-user.

A part of the mass memory is preferably dedicated for storing such broadcasted content and a new content may be stored thereby erasing at least part of a previously stored content when it is necessary to do so because there is not more memory space enough for storing the new content without erasing a content which had been previously stored.

Another embodiment is represented on figure 2, where memorizing, halt of memorizing, switching, and erasing commands are sent to the mobile equipment by means of point-to-point messages 15.

Those messages may be SMS messages, of the OTA (over-the-air) type, i,e. not displayed to the end-user and recognized as carrying particular commands.

The commands are sent to the mobile equipment 30 when the memorizing of programs, halt of memorizing of programs, switching of currently memorized program, or any other associated actions have to be triggered, i.e. at the beginning and at the end of a program for example. The mobile equipment 30 executes the commands as soon as they are received.

The advantage of sending commands in point-to-point messages rather than as broadcasted commands, is to allow the broadcaster to implement a campaign of storings which is adapted to the different end-users.

Some end-users who are interested in documentaries will have their mobile equipment 30 receive a memorizing message at the beginning of a documentary, whereas users interested in news programs will have their memorizing triggered at the beginning of a news program. Those preferences of the end-users are retrieved by the broadcaster for example through his web site where the end-user is enabled to choose them interactively through an interactive menu.

In another embodiment, the commands, either sent inside the stream or in a point-to-point message, are commands which are performed at a time afterwards receipt of the said command.

Those type of commands identify a program which is to be broadcasted in the future. In a preferred embodiment, each command has an identifier of the program, which same identifier precedes the program when it is broadcasted and the identifier is recognized by a dedicated application in the mobile equipment 30. Such application then memorizes the so recognized TV program.

In another embodiment, the commands are commands which identify a date and time of the day and which identify a channel. At the identified date and time of the day, the specified channel is memorized.

Updatings of the content of the mass memory card may be performed independently of the end-user having watched the programs or not.

However, in a particular embodiment of the invention, an application in the mobile equipment 30 detects a predetermined usage behavior by the end-user onto a memorized content and reacts to such behavior by leaving the memorized content longer than forecasted in the mass memory card, or on the contrary reacts to such identified behavior by erasing the memorized content from the mass memory card 36.

For example if the application detects that the end-user watches the program more than a given number of times in the frame of a given length of time, for example two days, this behavior is interpreted by the local application as meaning that the end-user is interested in the program. Then the application prevents this program to be replaced during a pre-determined period, by preventing any memorizing to be executed onto the memory location where the particular program is stored.

## Claims

1. A method for rendering content on a mobile equipment, comprising rendering a content from a broadcasted stream (10), the method further comprising the step which consists in providing a mass memory in the mobile equipment and storing content from the broadcasted stream into the mass memory **characterized in that** it comprises the step which consists in a remote broadcaster entity commanding (11, 12, 13, 15) the mobile equipment into storing the content from the broadcasted stream into the mass memory.

2. The method according to claim 1, **characterized in that** it comprises the step which consists in providing a memory area of the mass memory for storing the said content when the remote broadcaster entity commands (11, 12, 13, 15) the mobile equipment into storing the content from the broadcasted stream into the mass memory.

3. The method according to claim 1 or claim 2, **characterized in that** it comprises the step which consists in the broadcaster entity (20) commanding (11, 12, 13, 15) the mobile equipment into storing a first content from the broadcasted stream into the mass memory and commanding the mobile equipment into storing a second content into the mass memory in replacement of at least part of the first stored content occupying a corresponding at least part of the mass memory which is necessary for storing at least part of the second content.

4. The method according to claim 3, **characterized in that** it comprises the step which consists in the remote broadcaster entity (20) monitoring an amount of time elapsed since the first content was stored and the step which consists in the remote broadcaster entity commanding (11, 12, 13, 15) the storing of the second content into the mass memory when the monitored amount of time reaches a predetermined value.

5. The method according to the preceding claim, **characterized in that** it comprises the repetitive steps which consist in storing successive contents in replacement to each other on an every predetermined amount of time basis, so that every successive content (10) is available for being played to the end-user during the said predetermined amount of time.

6. The method according to anyone of claims 2 to 4, **characterized in that** the replacement of the preceding content (10) is executed independently of the end-user having played the content or not.

7. The method according to claim 1, comprising the step which consists in identifying an predetermined usage behavior and determining a duration for the memorized content (10) remaining in the mass memory when depending on such behavior being identified.

8. The method according to claim 6, **characterized in** the predetermined behavior consists in a predetermined number of playings by the end-user (30).
